# EUROPEAN PATENT SPECIFICATION

(11) **EP 0 409 250 B1**
(45) Date of publication and mention of the grant of the patent: **05.07.1995**
(21) Application number: 90113886.7
(22) Date of filing: 19.07.1990
(51) Int. Cl.: H02G 5/06

(54) **Three-phase insulating spacer**
Dreiphasiger isolierter Abstandshalter
Entretoise isolante triphasée

(30) Priority: 21.07.1989 JP 189649/89
(43) Date of publication of application: 23.01.1991
(73) Proprietor: MITSUBISHI DENKI K.K., Tokyo (JP)
(72) Inventor: Yamamoto, Hiroshi, c/o Itami Seisakusho Mitsubishi, Amagasaki City, Hyogo Prefecture (JP); Hama, Hiroyuki, c/o Itami Seisakusho Mitsubishi, Amagasaki City, Hyogo Prefecture (JP)
(74) Representative: Sajda, Wolf E., Dipl.-Phys.

(56) References cited:
- DE-A- 2 211 987
- PATENT ABSTRACTS OF JAPAN vol. 1, no. 127 (E-77) 21 October 1977,& JP-A-52 60948

## Description

### BACKGROUND OF THE INVENTION

The present invention relates to a three-phase insulating spacer for use in a gas insulating switchgear.

In particular, the invention relates to a three-phase insulating spacer providing mechanical support and electrical insulation for a set of a first, a second and a third conductor contained in a cylindrical container, each of the first, second and third conductors having an axis and the spacer being provided with holes for support of the conductors, wherein the holes are arranged so that the axes of the first conductor and the third conductor are positioned on a circle whose center is the same as that of the cylindrical container and which has a predetermined radius which allows a predetermined insulating distance to be provided between each of the first conductor and the third conductor and the container, whereas the hole for the second conductor is positioned such that the axis thereof is located inside of the circle by a radial distance and at a position which allows a predetermined insulating distance to be provided between the second conductor and each of the first conductor and the third conductor.

Such a three-phase insulating spacer is known from DE-A-2 211 987 disclosing an encapsulated high-voltage device, wherein three high voltage-carrying electrical conductors are supported with respect to an enclosure by means of arm-shaped insulators, which are arranged in the interior of the enclosure and form a triangular configuration which is fixed to the interior of the enclosure in pairs at three spaced apart locations. In the structure according to DE-A-2 211 087, the bottom of the enclosure is provided with a plurality of members which radially project into the interior and rest on the bottom. The members are rigidly mounted on the enclosure at a spacing relative to each other. These members may have a mushroom-shaped or a circular or a tubular or a rectangular cross-section with rounded edges wherein the members may be combined to form an elongated profile disposed in parallel to the axis of the enclosure. These members are for the purpose of creating a field-weakened compartment which is separated from the interior of the enclosure and serves to receive contaminants, in particular mill scale, chips, abraded material and the like in order to avoid an undesired migration of these contaminants in the interior of the enclosure.

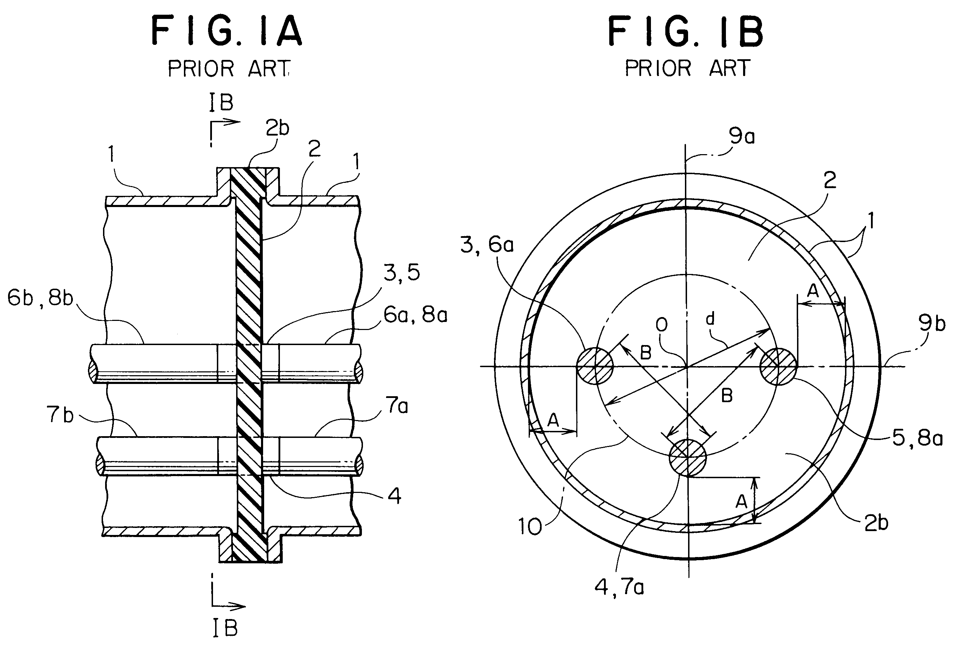

Fig. 1A is a vertical cross-sectional view of another conventional three-phase insulating spacer which is disclosed for example, in JP-A-227 622/1986, and Fig. 1B is a cross section taken along the line IB - IB of Fig. 1A. A three-phase insulating spacer 2 has a disk-shaped insulating plate 2b in which a conductor 3 for a first phase, a conductor 4 for a second phase and a conductor 5 for a third phase are buried in. The peripheral portion of the three-phase insulating spacer 2 is fixed between two cylindrical containers 1. Conductors 6a, 6b, 7a, 7b and 8a, 8b are respectively connected to the two ends of the first, second and third phase buried conductors 3, 4 and 5. In Fig. 1B, assuming that an intersection where a vertical central line 9a and a horizontal central line 9b of the container 1 and the three-phase insulating spacer 2 which lie perpendicular to each other, i.e., the central axis of the container 1 and the center of the three-phase insulating spacer 2, is designated by 0, the conductors 3, 4 and 5 are positioned on the central lines 9a or 9b, respectively, and on a circle 10 whose diameter is d and whose center is 0 with the second phase conductor 4 being located at the lowest position. The position of each conductor 3, 4 or 5 is adequately determined, with a distance A of insulation to the ground and an insulating distance B between the adjacent phases being taken into consideration. It is appropriate in this configuration that the diameter d of the circle 10 is about 0,55 times that of the diameter of the container 1.

In the above-described configuration, the distance A of insulation to the ground for three phases is the same. Furthermore, the insulating distance B between the first phase conductor 3 and the second phase conductor 4,and that between the second phase conductor 4 and the third phase conductor 5 are the same, while the insulating distance between the first phase conductor 3 and the third phase conductor 5 is longer than B. In this way, the overall configuration is well balanced.

In the above conventional three phase insulating spacer 2, it was found out from various tests that the insulating performance deteriorates when metal powder or the like enters into the interior of the container 1. In particular, the insulating performance between the container 1 and the lower conductor 4 for the second phase which is located near the bottom of the container 1 where metal powder or the like can easily accumulate, readily decreases as compared with that between the container 1 and the other conductors 3 or 5. Therefore, the common insulating distance A must be made large and the electrical field strength in a gas charged in the container 1 must be suppressed to a sufficiently low value with deterioration in the insulating performance between the second phase conductor 4 and the container 1 being taken into consideration. This increases the diameter of the container 1 and, hence, production cost.

### SUMMARY OF THE INVENTION

The present invention is directed to eliminating the aforementioned problem of the prior techniques and has the object of providing a three-phase insulating spacer which is capable of maintaining sufficient insulating performance regardless of any entry of metal powder or the like.

For this purpose, the present invention provides a three-phase insulating spacer of the type specified above which is characterized in that the insulating spacer has a disk-shape, in that the inner surface of the container is cylindrical, and in that the insulating distance between the second conductor and the container is larger than the insulating distance between each of the first conductor and the third conductor and the container such that sufficient insulating performance is maintained when metal powder or the like accumulates between the container and the second conductor.

According to a further development of the spacer according to the invention, the second conductor of the three conductors is supported at the lowest position.

According to a still further development of the spacer according to the invention, the second conductor is supported at a position where the axis thereof is on a central line of the spacer which lies perpendicular to the conductor axis.

In a specific embodiment of the spacer according to the invention, the spacer comprises an insulating plate having three holes through which the three conductors pass.

In a further development of this embodiment, the spacer includes first, second and third buried conductors which are respectively buried in the holes, wherein the conductors are respectively connected to the two ends of the buried conductors.

The invention will now be described by way of example and with reference to the accompanying drawings.

### BRIEF DESCRIPTION OF THE DRAWINGS

Fig. 1A is a vertical cross-sectional view of a conventional three-phase insulating spacer;
Fig. 1B is a section taken along a line IB - IB of Fig. 1A;
Fig. 2A is a vertical cross-sectional view of a first embodiment of a three-phase insulatinq spacer according to the present invention;
Fig. 2B is a section taken along a line IIB - IIB of Fig. 2A;
Fig. 3A is a vertical cross-sectional view of a second embodiment of the three-phase insulating spacer according to the present invention; and
Fig. 3B is a section taken alonq a line IIIB - IIIB of Fig. 3A.

### DESCRIPTION OF THE PREFERRED EMBODIMENTS

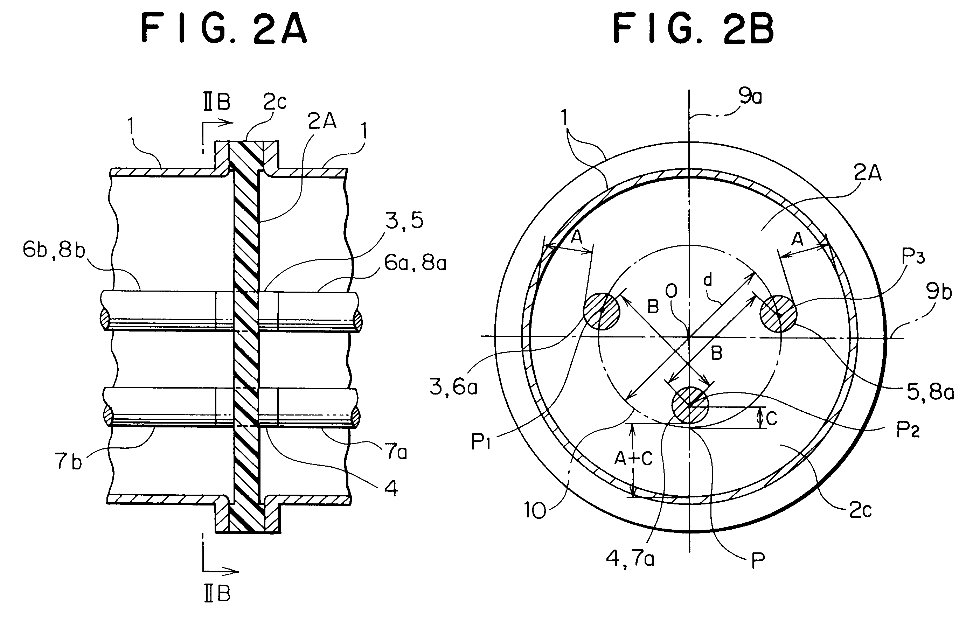

Fig. 2A is a vertical cross-sectional view of a first embodiment of the present invention, and Fig. 2B is a cross section taken alongtheline IIB - IIB of Fig. 2A. A three-phase insulating spacer 2A has a disk-shaped insulating plate 2c in which a first conductor 3 for a first phase, a second conductor 4 for a second phase and a third conductor 5 for a third phase are buried. The peripheral portion of the three-phase insulating space 2A is fixed between two cylindrical containers 1. First conductors 6a, 6b, second conductors 7a, 7b and third conductors 8a, 8b are respectively connected to the two ends of the first, second and third phase conductors 3, 4 and 5. The diameter of the containers 1 and of the three-phase insulating spacer 2A is the same as that of the conventional ones.

In Fig. 2B, assuming that an intersection of a vertical central line 9a and a horizontal central line 9b of the container 1 and the three-phase insulating spacer 2A which lie perpendicular to each other, i.e., the central axis of the container 1 and the center of the three-phase insulating spacer 2A, is designated by 0, the second conductor 4 for the second phase is positioned at a point P2 which is separated in the perpendicular direction by a distance C from an intersection P where a circle 10 whose center is the intersection O and whose diameter is d (radius is d/2) meets the central line 9a. The first phase conductor 3 and the third phase conductor 5 are respectively positioned at intersections P1 and P3 where a circle,whose center is P2 and whose radius is B,meets a circle whose center is the axis O and whose diameter is d. Since d and B are the same values as in a conventional spacer, the insulating distance between the first conductor 3 for the first phase and the second conductor 4 for the second phase, and that between the second conductor 4 for the second phase and the third conductor 5 for the third phase remain the same as those in the conventional spacer. C is set such that the insulating distance between the first conductor 3 for the first phase and the third conductor 5 for the third phase is slightly shorter than that in the conventional spacer. The insulating distance (the distance of insulation to the ground) between the first conductor 3 for the first phase and the container 1 and that between the third conductor 5 for the third phase and the container 1 are the same as those in the conventional techniques which are A. However, the insulating distance between the second conductor 4 for the second phase and the container 1 is A + C, and is slightly longer than that in the conventional techniques. This allows sufficient insulating performance to be maintained, which would otherwise deteriorate when metal powder or the like accumulates below the second conductor 4 for the second phase and the conductors 7a and 7b connected thereto.

In the above-described embodiment, the insulating distance between the second phase conductor 4 and the container 1 is made longer than those for the other conductors. However, the present invention is not limited to that configuration but applicable to a configuration in which the insulating distance between the container and a conductor for the phase which requires larger insulating distance is made longer.

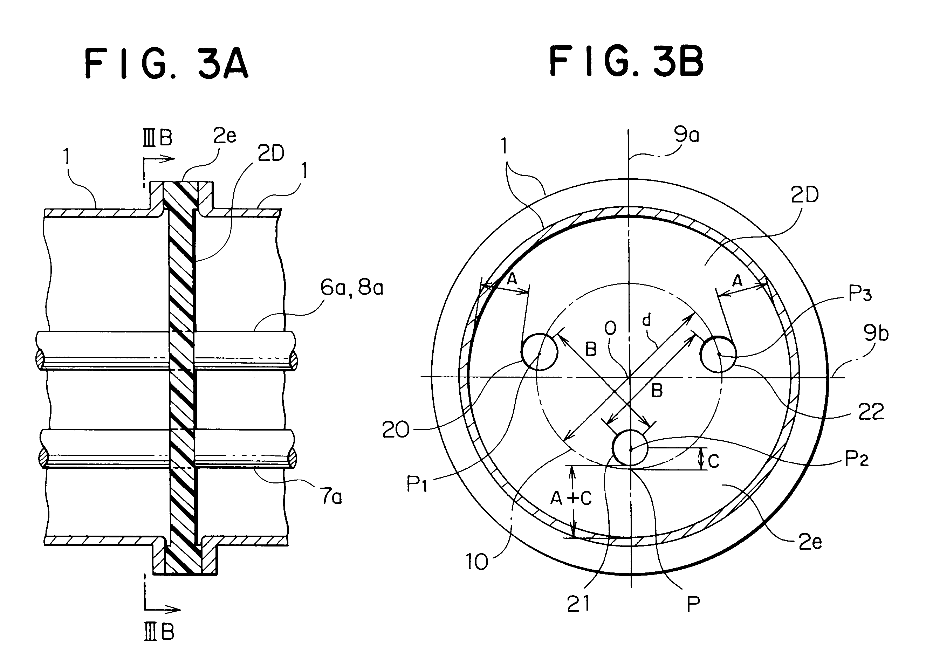

Fig. 3A is a vertical cross-sectional view of a second embodiment of e three-phase insulating spacer 2D according to the present invention, and Fig. 3B is a cross-section taken along the line IIIB - IIIB of Fig. 3A showing a state in which conductors are removed from the spacer 2D of Fig. 3A. In this embodiment, first to third holes 20, 21 and 22 whose centers are respectively located at P1 to P3 are formed in an insulating plate 2e of the three-phase insulating spacer 2D, but no conductors are buried in the insulating plate 2e. Points P1 to P3 have the same positions as those shown in Fig. 2B. Conductors 6a, 7a and 8a respectively pass through the holes 20, 21 and 22 and extend over the two containers 1, as shown in Fig. 3A, whereby the three conductors 6a and 7a and 8a are respectively supported at the above positions in the coupled portions of the containers 1.

## Claims

1. A three-phase insulating spacer (2A, 2D) providing mechanical support and electrical insulation for a set of a first (3, 6a, 6b), a second (4, 7a, 7b) and a third conductor (5, 8a, 8b) contained in a cylindrical container (1), each of the first, second and third conductors having an axis and the spacer (2A, 2D) being provided with holes (20, 21, 22) for support of the conductors, wherein the holes are arranged so that the axes of the first conductor (3, 6a, 6b) and the third conductor (5, 8a, 8b) are positioned on a circle (10) whose center (O) is the same as that of the cylindrical container (1) and which has a predetermined radius (d/2) which allows a predetermined insulating distance (A) to be provided between each of the first conductor (3, 6a, 6b) and the third conductor (5, 8a, 8b) and the container (1), whereas the hole for the second conductor (4, 7a, 7b) is positioned such that the axis thereof is located inside of the circle (10) by a radial distance (C) and at a position which allows a predetermined insulating distance (B) to be provided between the second conductor (4, 7a, 7b) and each of the first conductor (3, 6a, 6b) and the third conductor (5, 8a, 8b),
characterized in that the insulating spacer (2A, 2D) has a disk-shape (2c, 2e),
in that the inner surface of the container (1) is cylindrical,
and in that the insulating distance (A + C) between the second conductor (4, 7a, 7b) and the container (1) is larger than the insulating distance (A) between each of the first conductor (3, 6a, 6b) and the third conductor (5, 8a, 8b) and the container (1) such that sufficient insulating performance is maintained when metal powder or the like accumulates between the container (1) and the second conductor (4, 7a, 7b).

2. The three-phase insulating spacer according to claim 1, wherein the second conductor (4, 7a, 7b) of the three conductors is supported at the lowest position.

3. The three-phase insulating spacer according to claim 1 or 2, wherein the second conductor (4, 7a, 7b) is supported at a position where the axis thereof is on a central line (9a) of the spacer (2A, 2D) which lies perpendicular to the conductor axes.

4. The three-phase insulating spacer according to any of claims 1 to 3, wherein the spacer (2A, 2D) comprises an insulating plate (2c, 2e) having three holes (20, 21, 22) through which the three conductors pass.

5. The three-phase insulating spacer according to claim 4, wherein the spacer (2A) includes first, second and third buried conductors (3, 4, 5) which are respectively buried in the holes, and wherein the conductors (6a, 6b; 7a, 7b; 8a, 8b) are respectively connected to the two ends of the buried conductors (3, 4, 5).

## Patentansprüche

1. Isolierabstandshalter (2A, 2D) für drei Phasen, die mechanische Abstützung und elektrische Isolierung für einen Satz von einem ersten (3, 6a, 6b), einem zweiten (4, 7a, 7b) und einem dritten Leiter (5, 8a, 8b) bietet, die in einem zylindrischen Behälter (1) enthalten sind, wobei jeder von dem ersten, zweiten und dritten Leiter eine Achse hat und der Abstandshalter (2A, 2D) mit Löchern (20, 21, 22) zum Abstützen der Leiter versehen ist, wobei die Löcher so angeordnet sind, daß die Achsen des ersten Leiters (3, 6a, 6b) und des dritten Leiters (5, 8a, 8b) auf einem Kreis (10) positioniert sind, dessen Mittelpunkt (O) derselbe ist wie der des zylindrischen Behälters (1) und der einen vorbestimmten Radius (d/2) hat, der es ermöglicht, daß zwischen jedem von dem ersten Leiter (3, 6a, 6b) und dem dritten Leiter (5, 8a, 8b) und dem Behälter (1) ein vorbestimmter Isolierabstand (A) vorgesehen ist, wohingegen das Loch für den zweiten Leiter (4, 7a, 7b) derart positioniert ist, daß seine Achse um einen radialen Abstand (C) innerhalb des Kreises und an einer Position angeordnet ist, die es ermöglicht, daß zwischen dem zweiten Leiter (4, 7a, 7b) und jedem von dem ersten Leiter (3, 6a, 6b) und dem dritten Leiter (5, 8a, 8b) ein vorbestimmter Isolierabstand (B) vorgesehen ist,
dadurch gekennzeichnet, daß der Isolierabstandshalter ((2A, 2D) eine Scheibenform (2c, 2e) hat,
daß die Innenfläche des Behälters (1) zylindrisch ist und daß der Isolierabstand (A + C) zwischen dem zweiten Leiter (4, 7a, 7b) und dem Behälter (1) größer als der Isolierabstand (A) zwischen jedem von dem ersten Leiter (3, 6a, 6b) und dem dritten Leiter (5, 8a, 8b) und dem Behälter (1) ist, so daß eine ausreichende Isolierwirkung aufrechterhalten wird, wenn sich zwischen dem Behälter (1) und dem zweiten Leiter (4, 7a, 7b) Metallpulver oder dergleichen ansammelt.

2. Isolierabstandshalter für drei Phasen nach Anspruch 1,
wobei der zweite Leiter (4, 7a, 7b) der drei Leiter an der untersten Position abgestützt ist.

3. Isolierabstandshalter für drei Phasen nach Anspruch 1 oder 2,
wobei der zweite Leiter (4, 7a, 7b) in einer Position abgestützt ist, in der seine Achse auf einer Mittellinie (9a) des Abstandshalters (2A, 2D) liegt, die senkrecht zu den Leiterachsen verläuft.

4. Isolierabstandshalter für drei Phasen nach einem der Ansprüche 1 bis 3,
wobei der Abstandshalter (2A, 2D) eine Isolierplatte (2c, 2e) mit drei Löchern (20, 21, 22) aufweist, durch die die drei Leiter hindurchgehen.

5. Isolierabstandshalter für drei Phasen nach Anspruch 4,
wobei der Abstandshalter (2A) einen ersten, zweiten und dritten vergrabenen Leiter (3, 4, 5) aufweist, die jeweils in den Löchern vergraben sind, und wobei die Leiter (6a, 6b; 7a, 7b; 8a, 8b) jeweils mit den beiden Enden der vergrabenen Leiter (3, 4, 5) verbunden sind.

## Revendications

1. Entretoise isolante triphasée (2A, 2D) fournissant un support mécanique et une isolation électrique à un ensemble constitué d'un premier (3, 6a, 6b), d'un deuxième (4, 7a, 7b) et d'un troisième conducteur (5, 8a, 8b) se trouvant dans un récipient cylindrique (1), chacun des premier, deuxième et troisième conducteurs ayant un axe, et l'entroise (2A, 2D) présentant des trous (20, 21, 22) pour supporter les conducteurs, dans laquelle les trous sont agencés de façon que les axes du premier conducteur (3, 6a, 6b) et du troisième conducteur (5, 8a, 8b) soient positionnés sur un cercle (10) dont le centre (0) est le même que celui du récipient cylindrique (1) et qui a un rayon prédéterminé (d/2) qui permet la réalisation d'une distance isolante prédéterminée (A) entre chacun des premier (3, 6a, 6b) et troisième (5, 8a, 8b) conducteurs et le récipient (1), tandis que le trou pour le deuxième conducteur (4, 7a, 7b) est positionné de telle sorte que l'axe de celui-ci se situe à l'intérieur du cercle (10) suivant une distance radiale (C) et à une position qui permet l'établissement d'une distance isolante prédéterminée (B) entre le deuxième conducteur (4, 7a, 7b) et chacun des premier (3, 6a, 6b) et troisième (5, 8a, 8b) conducteurs, caractérisée en ce que l'entretoise isolante (2A, 20) a une forme de disque (2c, 2e), en ce que la surface intérieure du récipient (1) est cylindrique et en ce que la distance isolante (A+C) entre les deuxième conducteur (4, 7a, 7b) et le récipient (1) est plus grande que la distance isolante (A) entre chacun des premier (3, 6a, 6b) et troisième (5, 8a, 8b) conducteurs et le récipient (1), de façon à maintenir une performance isolante suffisante lorsque de la poudre métallique ou analogue s'accumule entre le récipient (1) et le deuxième conducteur (4, 7a, 7b).

2. Entretoise isolante triphasée selon la revendication 1, dans laquelle le deuxième conducteur (4, 7a, 7b) des trois conducteurs est supporté à la position la plus basse.

3. Entretoise isolante triphasée selon la revendication 1 ou 2, dans laquelle le deuxième conducteur (4, 7a, 7b) est supporté à une position où l'axe de celui-ci se situe sur une ligne centrale (9a) de l'entretoise (2A, 2D) qui est perpendiculaire à l'axe du conducteur.

4. Entretoise isolante triphasée selon l'une des revendications 1 à 3, dans laquelle l'entretoise (2A, 2D) comprend une plaque isolante (2c, 2e) ayant trois trous (20, 21, 22) à travers lesquels les trois conducteurs passent.

5. Entretoise isolante triphasée selon la revendication 4, dans laquelle l'entretoise (2A) comprend des premier, deuxième et troisième conducteurs noyés (3, 4, 5) qui sont respectivement noyés dans les trous et dans laquelle les conducteurs (6a, 6b; 7a, 7b; 8a, 8b) sont respectivement connectés aux deux extrémités des conducteurs noyés (3, 4, 5).
